# EUROPÄISCHE PATENTSCHRIFT

(11) **EP 3 411 308 B1**
(45) Veröffentlichungstag und Bekanntmachung des Hinweises auf die Patenterteilung: **09.09.2020**
(21) Anmeldenummer: 17702384.3
(22) Anmeldetag: 01.02.2017
(51) Int. Cl.: B65D 77/20, B32B 7/06, B32B 7/12, B32B 25/14, B32B 25/16, B32B 27/08, B32B 27/18, B32B 27/20, B32B 27/30, B32B 27/32, B32B 27/34, B32B 27/36, B32B 3/26, B32B 25/08, B32B 27/10, B32B 29/00, B32B 9/02, B32B 9/04, B32B 9/06, B41M 5/26

(54) **FOLIENVERPACKUNGSMATERIAL**
FILM-TYPE PACKAGING MATERIAL
MATÉRIAU D'EMBALLAGE FLEXIBLE

(30) Priorität: 02.02.2016 AT 500572016
(43) Veröffentlichungstag der Anmeldung: 12.12.2018
(73) Patentinhaber: Constantia Teich GmbH, 3205 Weinburg (AT)
(72) Erfinder: REUTER, Dieter, 3204 Kirchberg (AT); AFFLENZER, Robert, 3205 Weinburg (AT); RESCH, Helmut, 3203 Rabenstein (AT); TEUBENBACHER, Jasmin, 3205 Weinburg (AT)
(74) Vertreter: Patentanwälte Pinter & Weiss OG
(86) Internationale Anmeldenummer: PCT/EP2017/052144
(87) Internationale Veröffentlichungsnummer: WO 2017/134099

(56) Entgegenhaltungen:
- EP-A1- 1 728 624
- DE-A1- 10 057 164
- DE-A1- 10 057 165
- DE-A1- 10 253 680
- US-A1- 2008 076 065

## Beschreibung

Die Erfindung betrifft ein Folienverpackungsmaterial mit zumindest einer Bearbeitungsschicht und zumindest einer Barriereschicht, wobei zwischen der Bearbeitungsschicht und der Barriereschicht zumindest eine weitere Schicht angeordnet ist, sowie ein aus diesem Folienverpackungsmaterial hergestelltes Verpackungselement, insbesondere eine Platine. Weiters betrifft die Erfindung ein Verfahren zur Herstellung des Folienverpackungsmaterials.

Für die industrielle Fertigung von Folien, die einseitige Teilschnitte oder Einkerbungen, etwa als Schwächungslinien, aufweisen, werden üblicherweise mechanische Verfahren, wie etwa das unter der Bezeichnung "Kisscut" bekannte Verfahren verwendet. Wesentlich ist, dass der einseitig in die Folie eingebrachte Schnitt an keiner Stelle das Folienmaterial gänzlich durchtrennt und somit die Dichtheit der Folie gewahrt bleibt.

Einseitige Schnittführungen sind nicht nur für Schwächungslinien erforderlich, sondern sie erlauben auch komplexere Anwendungen, etwa die Herstellung von Abziehplatinen zum Verschließen von Behältern, bei denen ein definierter Teil der Platine nach dem Abziehen auf dem Behälter verbleibt, etwa um eine Trink- oder Ausgussöffnung zu definieren. Eine solche Platine ist beispielsweise in der EP 2 040 915 A1 offenbart. Diese Platinen werden aus einem mehrschichtigen Folienlaminat hergestellt, das zumindest eine Außenschicht, eine Innenschicht und eine dazwischenliegende Reclose-Klebeschicht aufweist. Um die Trink- oder Ausgussöffnung zu definieren, wird die Innenschicht am Rand der Öffnung bis zur Kleberschicht hin durchtrennt, ohne dass dabei die Außenschicht durchtrennt werden darf. Die Außenschicht weist eine Barrierefunktion auf, die durch den Teilschnitt nicht beeinträchtigt werden darf.

Versuche, die Teilschnitte mit einem Laserschnittverfahren herzustellen, führten in der Praxis zu Problemen hinsichtlich der Eindringtiefe des Laserschnitts. Insbesondere bei dünnen Kunststoffmaterialien bilden sich bei höheren Bearbeitungsgeschwindigkeiten auf den Transportwalzen unweigerlich Materialwelligkeiten bzw. Verwerfungen aus, die nur durch eine verringerte Bahngeschwindigkeit der Verarbeitungseinrichtung vermieden werden können. Auch wenn die Verwerfungen bzw. Welligkeiten nur geringe Auswirkungen auf die normale Verarbeitung des Folienmaterials hat, führt sie beim Laser-Teilschnitt dazu, dass der Fokussierpunkt des Lasers im Bereich der Verwerfungen zu tief in das Folienmaterial eindringt, sodass der Laser das Material dort vollständig durchtrennt. Wenn auch nur ein geringes Risiko besteht, dass die Teilschnitte in manchen Bereichen das gesamte Folienmaterial durchtrennen, ist das Verfahren für die praktische Verwendung unbrauchbar, da der Hersteller die Dichtheit des Folienmaterials bzw. der mit dem Folienmaterial hergestellten Verpackungsprodukte, wie etwa Platinen und andere Verpackungselemente, sicherstellen und den Abnehmern garantieren können muss. Der Hersteller hat nun entweder die Möglichkeit, aufwändige In-Line-Qualitätskontrollen einzubauen, um sicherzustellen, dass Ausschussmaterial zuverlässig erkannt wird, oder die Bearbeitungsgeschwindigkeit soweit zu reduzieren, dass das Risiko des Auftretens von Verwerfungen ausgeschlossen ist. Beides führt zu erheblichen Zusatzkosten, die die Herstellungsverfahren unwirtschaftlich machen. EP1728624A1 offenbart eine mehrschichtige Folie, die durch Coextrusion einer Farbschicht, einer Effektschicht und gegebenenfalls einer weiteren Schicht hergestellt wird. Die Farbschicht enthält Farbpigmente und die Effektschicht enthält Effektpigmente. Die Folie dient der optischen Gestaltung von Gegenständen und Oberflächen aller Art, auf die die Folie aufgebracht wird.

DE 10057165 A1 und DE 10057164 A1 offenbaren jeweils unter anderem den Einsatz von Pigmenten in dreischichtigen Verbundfolien. Eine farbgebende Zwischenschicht enthält verschiedene Pigmente, wie etwa Glanzpigmente. Die Verbundfolien weisen eine Dicke von etwa 850 µm auf und sind zum Tiefziehen von Kunststoff-Formteilen vorgesehen.

DE 10253680 A1 offenbart Verbundgebilde, insbesondere Verbundfolien zur Innenverkleidung von Fahrzeugen, mit einem Gehalt an Effekt-Pigmenten. In mindestens einer des mehrlagigen Verbundgebildes befindet sich ein flüssigkristallines Effektpigment. US 2008/076065 A1 offenbart lasermarkierbare, coextrudierte, steife Mehrschichtfolien, insbesondere zur Herstellung von Kreditkarten, Ausweiskarten oder Ähnlichem. In einer Ausführungsform weist die Mehrschichtfolie eine innere Markierschicht auf, die an beiden Seiten von äußeren Schichten umgeben ist. Die Markierschicht weist ein Weiß-Pigment und ein Laser-Absorbermaterial auf. Dadurch ist es möglich, durch eine der Außenschichten hindurch mit einem Laser eine Lasermarkierung (d.h. eine Farbänderung) in die mittlere Markierschicht einzubringen. Die Außenschichten bleiben dabei vom Laser unbeeinträchtigt. Es ist ein Ziel der gegenständlichen Erfindung, ein Verfahren und ein Material bereitzustellen, mit dem die Schnitttiefe von Laser-Teilschnitten auch in sehr dünnem Folienmaterial zuverlässig eingehalten und stabil parametrisiert werden kann. Das Folienmaterial soll kostengünstig sein und den jeweiligen Umwelt- und Hygienestandards entsprechen.

Dieses und weitere Ziele werden erfindungsgemäß durch ein Folienverpackungsmaterial nach Anspruch 1 mit zumindest einer Bearbeitungsschicht (2) und zumindest einer Barriereschicht (3), wobei zwischen der Bearbeitungsschicht (2) und der Barriereschicht (3) zumindest eine weitere Schicht (6) angeordnet ist erreicht, bei dem in der weiteren Schicht ein einen Laserstrahl reflektierendes und/oder streuendes Material vorgesehen ist, welches die Wirkenergie eines von Seiten der Bearbeitungsschicht her eingebrachten Laserstrahls auf die Barriereschicht verringert bzw. verhindert, wobei in die Bearbeitungsschicht mittels zumindest eines Laserstrahls zumindest ein Laser-Teilschnitt eingebracht wird. Dies ermöglicht die Einhaltung hoher Qualitätskriterien und gewährleistet eine Dichtheit des Folienverpackungsmaterials auch im Bereich der Laser-Teilschnitte. Dadurch lassen sich auch deutlich höhere Bearbeitungsgeschwindigkeiten beim Einbringen von Laser-Teilschnitten erzielen, als dies mit herkömmlichen Materialien möglich ist, da die Barriereschicht auch beim Auftreten von Verwerfungen, Wellen und Stärkeabweichungen zuverlässig nicht durchtrennt wird, sondern der Laser den Schnitt nur in die Bearbeitungsschicht des Folienverpackungsmaterials bis zur weiteren Schicht einbringt.

Als Barriereschicht wird im Zusammenhang mit der gegenständlichen Erfindung eine Schicht des Folienverpackungsmaterials bezeichnet, die vom Laser nicht durchtrennt werden darf. Als Bearbeitungsschicht wird hingegen die Schicht bezeichnet, die vom Laser-Teilschnitt selektiv durchtrennt werden soll.

In der weiteren Schicht ist vorteilhafterweise Effektpigment, vorzugsweise Metall-Effektpigment, als reflektierendes und/oder streuendes Material enthalten, wobei das Effektpigment vorzugsweise eine durchschnittliche Körnung im Bereich zwischen 10 µm und 100 µm, bevorzugt zwischen 15 µm und 70 µm und insbesondere im Bereich zwischen 20 und 60 µm aufweist.

Bei Versuchen haben die Erfinder überraschender Weise festgestellt, dass eine besonders vorteilhafte Wirkung erzielt werden kann, wenn in der weiteren Schicht Effektpigment enthalten ist. In weiterführenden Versuchen wurden unterschiedliche Körnungen für das Effektpigment untersucht, wobei eine zu geringe Körnung - etwa im Bereich einer durchschnittlichen Korngröße von unter 10 µm, in dem üblicherweise Metallpigmente liegen - eine hohe Absorption des Laserstrahls bewirkte, die sich nachteilig auf die Qualität des Laser-Teilschnitts auswirken kann. Effektpigment mit zu großen Partikeln, etwa in einem Bereich einer durchschnittlichen Korngröße von über 80 µm oder über 100 µm, kann hingegen zu Problemen bei der Verarbeitung führen, da die Effektpigmentpartikel die Rakel zum Auftragen des Klebers beschädigen oder zumindest behindern können. Gemäß den Untersuchungen kann das Effektpigment vorzugsweise eine durchschnittliche Körngröße im Bereich zwischen 10 µm und 100 µm, bevorzugt zwischen 15 µm und 70 µm und insbesondere im Bereich zwischen 20 und 60 µm aufweisen.

Einen optimalen erfindungsgemäßen Effekt haben die Erfinder mit einer Korngröße von 30 bis 50 µm erzielt. Bei kleineren Korngrößen, beispielsweise zwischen 20 und 30 µm, kann ebenfalls noch ein guter, wenn auch zunehmend schwächerer Effekt erzielt werden. Größere Korngrößen sind ebenfalls effektiv, wirken sich zunehmend negativ auf die Verarbeitbarkeit aus.

Als "Effektpigmente" werden im Zusammenhang mit der gegenständlichen Offenbarung Pigmente bezeichnet, die dem Material der weiteren Schicht, in die sie eingebettet sind zusätzliche Eigenschaften verleihen. Dabei sind insbesondere reflektierende und/oder streuende Eigenschaften erfindungsgemäß erwünscht. Besonders bevorzugt können Metall-Effektpigmente verwendet werden, die vorteilhafte stark reflektierende Eigenschaften aufweisen. Herkömmliche Effektpigmente weisen im Allgemeinen eine plättchenförmige Kornstruktur auf, wobei die Plättchen zur Erzielung des Effekts vorzugsweise parallel zur Oberfläche der weiteren Schicht ausgerichtet sind. Es können sowohl Leafing- als auch Non-Leafing-Effektpigmente eingesetzt werden, wobei die Verwendung von Leafing-Effektpigmenten eine stärkere Reflexion und eine höhere Lichtdichte ermöglicht. Die spezifischen Eigenschaften von Effektpigmenten und deren vorteilhafte Handhabung sind aus zahlreichen Anwendungen bekannt, etwa aus der Lackiertechnik. Effektpigmente bzw. Metall-Effektpigmente können in Pulver- oder Pastenform vor der Verarbeitung dem Material der weiteren Schicht zugemischt werden.

Wenn die Verbindungsschicht mehrlagig ausgeführt ist, wobei zumindest eine erste Lage mit reflektierendem und/oder streuendem Material und zumindest eine weitere Lage ohne reflektierendem und/oder streuendem Material vorgesehen ist, kann die Verbindung zwischen den Schichten im Folienverpackungsmaterial verbessert werden, da das Material der Lage ohne reflektierendem und/oder streuendem Material beispielsweise gezielt gewählt werden kann, um die Verbindung bzw. Haftung zur benachbarten Schicht im Folienverpackungsmaterial, beispielswiese die Bearbeitungsschicht oder die Barriereschicht, zu verbessern. Diese Lage kann insbesondere als Haftvermittlerschicht ausgeführt sein.

Eine mehrlagige Verbindungsschicht ist im Falle von Effektpigmenten besonders vorteilhaft, da die Effektpigmete eine abrasive Wirkung haben können. Durch die abrasive Wirkung kann es insbesondere bei der Verarbeitung in einem Extrusionsverfahren zu Beschädigungen an der Extrusionsanlage kommen, was durch die zusätzliche Lage ohne Effektpigment verhindert werden kann. Dabei ist es besonders vorteilhaft, wenn die erste Lage mit Effektpigment von Lagen ohne Effektpigment umgeben ist, also vollkommen eingeschlossen ist. Hierbei ist es auch vorteilhaft, wenn als weitere Lage ohne Effektpigment ein Haftvermittler verwendet wird, der die Haftung zur benachbarten Schicht des Folienverpackungsmaterials verbessert.

In einer weiteren vorteilhaften Ausgestaltung kann an der der Barriereschicht zugewandten Oberfläche der Bearbeitungsschicht oder an der der Bearbeitungsschicht zugewandten Oberfläche der Barriereschicht eine Lackschicht als weitere Schicht vorgesehen sein. Damit kann die Bearbeitungsschicht oder Barriereschicht bereits vorher mit der weiteren Schicht mit dem reflektierenden und/oder streuenden Material versehen werden, was die Herstellung des Folienverpackungsmaterials vereinfachen kann. Insbesondere kann die Verarbeitung des reflektierenden und/oder streuenden Materials in einem Lack einfacher und genauer (z.B. Planheit der Schicht) erfolgen, als in einer Verbindungschicht, beispielsweise in Form eines Klebers.

In vorteilhafter Weise kann die Verbindungsschicht einen Kaschierkleber aufweisen, und insbesondere kann der Kaschierkleber ein druckempfindlicher Kleber sein. Dadurch ist es möglich, die das Folienverpackungsmaterial nutzende Verpackung mit besonderen Merkmalen, wie etwa einer Wiederverschließbarkeit von Öffnungen, zu versehen.

In vorteilhafter Weise kann der druckempfindliche Kaschierkleber beim Abziehen der Barriereschicht von der Bearbeitungsschicht im Wesentlichen vollständig auf der Barriereschicht haften bleiben. Dies kann durch im Stand der Technik bekannte Verfahren, wie etwa eine Oberflächenbehandlung oder einen Primer auf der dem Kaschierkleber zugewandten Folienoberflächen, zuverlässig sichergestellt werden. Wenn jetzt die Barriereschicht von dem Folienverpackungsmaterial abgezogen wird, bleiben nur bestimmte, durch die Laser-Teilschnitte definierte Bereiche der Bearbeitungsschicht auf der Barriereschicht haften und werden von der Verpackung entfernt. Der Rest der Bearbeitungsschicht bleibt weiterhin ein integraler Bestandteil der Verpackung. Dadurch lassen sich in unterschiedliche Verpackungen auf einfache Weise Öffnungen definieren, die erst vom Verbraucher durch Abziehen der Barriereschicht hergestellt werden. Da der Klebstoff im Wesentlichen auf der abgezogenen Barriereschicht verbleibt, können auch Trinköffnungen hergestellt werden, die beim Trinken kein klebriges Gefühl auf den Lippen bewirken. Diese vorteilhaften Wirkungen lassen sich für zahlreiche Verpackungsarten nutzen, in denen Folienverpackungsmaterialien verwendet werden, etwa für Pouch-Verpackungen, Platinen zum Verschließen von Verpackungsbehältern oder ähnlichem.

In einer besonders vorteilhaften Ausgestaltung ist dem Kaschierkleber reflektierendes und/oder streuendes Material, vorzugsweise Effektpigment, vor der Verarbeitung zugemischt. Dabei lässt sich der Kaschierkleber mit dem zugemischten Material ohne zusätzlichen Aufwand wie herkömmlicher Kaschierkleber verwenden.

In vorteilhafter Weise kann die weitere Schicht zusätzlich Farbpigmente, etwa mit einem Gewichtsanteil zwischen 1% und 10%, vorzugsweise zwischen 2 % - 3 %, zugesetzt sein. Durch eine Zumengung von Farbpigmenten können besondere farbliche Effekte erzielt werden. Um die reflektierende/streuende Wirkung des Effektpigments nicht zu beeinträchtigen, und um die Absorption der Laserenergie nicht zu stark zu erhöhen, werden bevorzugter Weise die oben definierten geringe Mengen an Farbpigmenten verwendet. In die Bearbeitungsschicht sind Laser-Teilschnitte eingebracht.

Dadurch lassen sich bereits im Folienverpackungsmaterial, bevor es schließlich zu der Verpackung verarbeitet wird, die erforderlichen Öffnungsmerkmale und/oder Schwächungslinien einbringen.

Die Verbindungsschicht bzw. der Kaschierkleber kann entweder flächig, oder auch partiell aufgetragen sein. Durch eine partielle Auftragung mittels im Fachbereich bekannter Kaschiertechniken kann die erfindungsgemäße Wirkung genau auf die Bereiche des Folienverpackungsmaterials beschränkt werden, in denen die Laserschnitte eingebracht werden sollen, etwa im Bereich einer Ausgussöffnung, und/oder in denen eine gute Verbindung zwischen Barriereschicht und Verarbeitungsschicht erforderlich ist, etwa am Siegelrand einer Platine. In den anderen Bereichen kann entweder eine dünnere Verbindungs- bzw. Kleberschicht vorgesehen sein, oder es kann ganz auf die Verbindungsschicht verzichtet werden, was zum Beispiel das Abziehen der Bearbeitungsschicht von der Barriereschicht erleichtern kann. Beispielsweise kann die Dicke der Bearbeitungsschicht in dem Bereich, wo die erfindungsgemäße Wirkung erforderlich ist, etwa 20 µm betragen, und in den restlichen Bereichen auf beispielsweise 2 µm oder weniger verringert werden.

Erfindungsgemäß betrifft die Anmeldung weiters ein aus einem erfindungsgemäßen Folienverpackungsmaterial hergestelltes Verpackungselement, insbesondere eine Platine zum Verschließen von Verpackungsbehältern. Als Verpackungselemente können im Zusammenhang mit der gegenständlichen Erfindung alle Teilelemente bezeichnet werden, aus denen eine Verpackung zusammengengesetzt ist. Beispielsweise kann das Verpackungselement als Teil einer Pouch-Verpackung eingesetzt werden, etwa um definierte und gegebenenfalls wiederverschließbare Öffnungen in der Verpackung vorzusehen. In gleicher Weise kann das Verpackungselement mit anderen Verpackungen, wie etwa Kunststoffkisten oder Kartonschachteln, verwendet werden.

In vorteilhafter Weise kann die Bearbeitungsschicht des Folienverpackungsmaterials bzw. der Platine ein Siegelmaterial aufweisen, das die Versieglung auf einem Verpackungsbehälter ermöglicht.

In einer vorteilhaften Ausführungsform kann die Verbindungsschicht des Folienverpackungsmaterials bzw. der Platine einen nicht aushärtenden und/oder druckempfindlichen Kaschierkleber aufweisen und/oder in die Bearbeitungsschicht kann zumindest ein mittels zumindest eines Laser-Teilschnitts definierter Öffnungsabschnitt eingebracht sein. Mithilfe dieser Merkmale können Platinen hergestellt werden, bei denen nach dem Abziehen die Bearbeitungsschicht unter Freigabe definierter Ausguss- oder Trinköffnungen auf dem Verpackungsbehälter bleibt. Auch andere Öffnungen, beispielweise in Form eines Siebes, können dadurch verwirklicht werden.

Die Erfindung betrifft weiters ein Verfahren zur Herstellung eines Folienverpackungsmaterials, wobei eine Bearbeitungsschicht und eine Barriereschicht mittels zumindest einer Verbindungsschicht miteinander zu dem Folienverpackungsmaterial flächig verbunden werden, wobei in einer weiteren, zwischen der Bearbeitungsschicht und die Barriereschicht angeordneten Schicht ein einen Laserstrahl reflektierendes und/oder streuendes Material eingebracht wird, welches die Wirkenergie eines von Seiten der Bearbeitungsschicht her eingebrachten Laserstrahls auf die Barriereschicht verringert, und dass in die Bearbeitungsschicht mittels zumindest eines Laserstrahls zumindest ein Laser-Teilschnitt eingebracht wird.

Bevorzugter Weise können aus dem Folienverpackungsmaterial Verpackungselemente, insbesondere Platinen ausgestanzt werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine Schnittansicht einer Laminatfolie des Standes der Technik während einer Bearbeitung;
Fig. 2 eine schematische Schnittdarstellung eines erfindungsgemäßen mehrschichtigen Folienmaterials;
Fig. 3 eine Schnittansicht des erfindungsgemäßen mehrschichtigen Folienmaterials während der Einbringung von Laser-Teilschnitten;
Fig. 4 eine schaubildliche Darstellung eines Verpackungsbehälters, der mit eine erfindungsgemäßen, aus dem mehrschichtigen Folienmaterial hergestellten Platine verschlossen ist;
Fig. 5 zeigt eine spezifische Ausführungsform einer erfindungsgemäßen Platine mit einer partiellen Kaschierung in einer Ansicht von der Bearbeitungsschicht her gesehen;
Fig. 6 zeigt eine schematische Schnittdarstellung der Schichten der auf einen Behälter aufgesiegelten Platine der Fig. 5;
Fig.7 ein erfindungsgemäßes mehrschichtiges Folienmaterial mit einer mehrlagigen Verbindungsschicht als weitere Schicht; und
Fig.8 ein erfindungsgemäßes mehrschichtiges Folienmaterial mit einer Lackschicht als weitere Schicht.

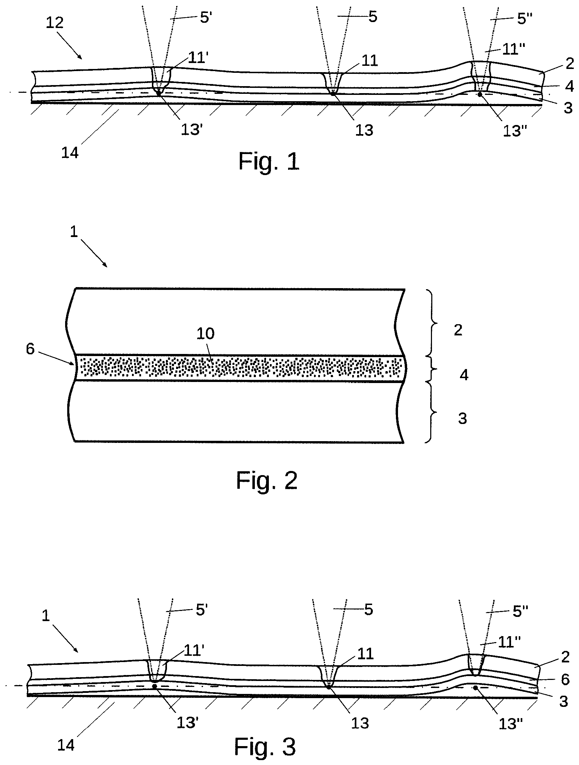

Fig. 1 zeigt eine Laminatfolie 12 gemäß dem Stand der Technik, die aus einer Bearbeitungsschicht 2, einer Barriereschicht 3 und einer dazwischenliegenden Verbindungsschicht 4 aufgebaut ist, wobei die Verbindungsschicht 4 beispielsweise ein Kaschierkleber sein kann, der die Bearbeitungsschicht 2 mit der Barriereschicht 3 verbindet.

Für manche Verpackungslösungen ist es gewünscht, einseitig in die Laminatfolie 12 Schnitte einzubringen, die die Bearbeitungsschicht 2 möglichst vollständig durchtrennen, während sie die Unversehrtheit der Barriereschicht 3 gewährleisten. Solche "Teilschnitte" können beispielsweise gewünscht sein, um Trennlinien zu erzeugen, entlang derer die Laminatfolie 12 definiert bis zur Verbindungsschicht 4 durchtrennt ist. Bei der Verwendung von druckempfindlichen Kaschierklebern kann die Barriereschicht 3 von der Bearbeitungsschicht 2 abgelöst werden, wodurch sich ein teilweises Öffnen der von der Laminatfolie 12 gebildeten Verpackungseinheit realisieren lässt. Dabei werden definierte Bereiche der Bearbeitungsschicht 2 durch Teilschnitte "ausgeschnitten", und die Laminatfolie 12 so in die Verpackungseinheit integriert, dass die Bearbeitungsschicht 2 zumindest einen Teil der Innenwandung der Verpackungseinheit darstellt und die Barriereschicht 3 auf der dem Benutzer zugewandten Seite angeordnet ist. Der Benutzer kann dann die Barriereschicht 3 abziehen, wobei die Bearbeitungsschicht 2 weiterhin einen integralen Bestandteil der Verpackungseinheit bleibt. Lediglich die aus der Bearbeitungsschicht 2 ausgeschnittenen Bereiche bleiben an der Barriereschicht 3 haften und werden mit dieser abgezogen, wobei beispielsweise eine definierte Ausguss-, Trink- oder Entnahmeöffnung in diesen Bereichen gebildet wird. Aufgrund der vorteilhaften Eigenschaften des druckempfindlichen Klebers kann die Barriereschicht 3 nach dem Öffnen auch wieder in der ursprünglichen Position angeklebt werden, sodass eine wiederverschließbare Verpackungseinheit ermöglicht ist.

Da die Teilschnitte lediglich die Bearbeitungsschicht 2 durchtrennen sollen, aber die Barriereschicht 3 nicht durchtrennen dürfen, werden derzeit üblicherweise mechanische Schneideverfahren angewendet, etwa in Form eines Kisscut-Verfahrens durch Einstanzen oder Anstanzen. Diese Verfahren erlauben eine sehr genaue Einstellung der Eindringtiefe und dadurch hohe Bearbeitungsgeschwindigkeiten. Nachteilig sind die hohen Kosten, die für die Herstellung der Stanzwerkzeuge anfallen, und die geringe Flexibilität, da für jedes neue Schnittmuster neue Werkzeuge hergestellt werden müssen.

Um eine flexible Änderung der Schnittführung zu erlauben, können die Teilschnitte mit einem Laser eingebracht werden. Dieses Verfahren ist in Fig. 1 beispielhaft dargestellt, wobei ein Laserstrahl 5 einen Laser-Teilschnitt 11 in die Bearbeitungsschicht 2 einbringt und wobei die Tiefe des Laser-Teilschnitts 11 durch die Energie und die Art des Laserstrahls 5 (in Verbindung mit dem zu schneidenden Material) und durch die Lage des Fokussierpunkts 13 des Lasers definiert ist. Die Eindringtiefe kann mit diesen Parametern auf die Dicke des Materials angepasst werden. In der Praxis haben sich jedoch insbesondere dann Probleme ergeben, wenn die Laminatfolie 12 aus einem dünnen und elastischen Material besteht. In diesem Fall kommt es nämlich insbesondere bei höheren Verarbeitungsgeschwindigkeiten zur Bildung von Verwerfungen, an denen sich die Laminatfolie 12 in manchen Bereichen von der Oberfläche der Transportwalze 14 abhebt.

Fig. 1 zeigt die Auswirkungen solcher Verwerfungen, die in der Praxis nicht vollständig vermeidbar sind, auf die Eindringtiefe des Laserstrahls 5. Bereits bei einer minimalen Abhebung, wie sie im Bereich des links in Fig. 1 dargestellten Laserstrahls 5' beispielhaft dargestellt ist, dringt der Laser-Teilschnitt 11' bereits etwa bis zur Hälfte in die Barriereschicht 3 ein. Im Bereich des rechts in Fig. 1 dargestellten Laserstrahls 5" befindet sich eine größere Verwerfung, sodass der Fokussierpunkt 13 dort an der der Transportwalze 14 zugewandten Außenfläche der Barriereschicht 3 liegt. Dies bewirkt, dass der Laser-Teilschnitt 11" dort das Material der Laminatfolie 12 vollständig durchdringt. An dieser Stelle wäre ein aus dieser Laminatfolie 12 hergestelltes Verpackungsmaterial undicht, was nicht nur zum Austreten von verpacktem Material, sondern auch zum Eindringen von Bakterien und Verunreinigungen in das verpackte Produkt führen kann. Auch Stärkeänderungen, die in der Praxis teilweise zu bis zu einem Drittel verringerten Dicken der Schichten führen können, oder Inhomogenitäten des Materials können die Wirkung des Lasers auf die Laminatfolie 12 so verändern, dass der Laser-Teilschnitt über die Bearbeitungsschicht 2 und die Verbindungsschicht 4 hinaus in die Barriereschicht 3 eindringt oder diese sogar durchschneidet.

Wenn ein Risiko für solche Bearbeitungsfehler besteht, kann entweder die Produktionsgeschwindigkeit verringert werden, um das Auftreten von Verwerfungen zu vermeiden, und/oder es kann eine dickere Laminatfolie 12 verwendet werden, die sich weniger leicht verwirft und die der Eindringtiefe des Laser-Teilschnitts 11 einen größeren Toleranzbereich lässt. Einer Optimierung, z.B. der der Materialdicke zur Materialersparnis und Ressourcenschonung oder einer Erhöhung der Verarbeitungsgeschwindigkeit zur Produktivitätssteigerung, sind dadurch jedoch Grenzen gesetzt, die erfindungsgemäß überwunden werden sollen.

Fig. 2 zeigt schematisch den Aufbau eines erfindungsgemäßen Folienverpackungsmaterials 1, wobei dieses Folienverpackungsmaterial 1 hinsichtlich seines Aufbaus einige Merkmale mit der in Fig.1 dargestellten Laminatfolie 12 gemeinsam hat. Eine (in Fig. 2 als unterste Schicht dargestellte) Barriereschicht 3 ist mit einer Bearbeitungsschicht 2 zum Folienverpackungsmaterial 1 verbunden. Zwischen der Bearbeitungsschicht 2 und der Barriereschicht 3 ist zumindest eine weitere Schicht 6 vorgesehen, die ein den Laserstrahl 5 reflektierendes und/oder streuendes Material enthält, welches die Wirkenergie eines von Seiten der Bearbeitungsschicht 2 her eingebrachten Laserstrahls 5 auf die Barriereschicht 3 verringert. Die Bearbeitungsschicht 2 und die Barriereschicht 3 sind vorzugsweise mit einer Verbindungsschicht 4 miteinander verbunden.

Die Bearbeitungsschicht 2 kann je nach Verwendungszweck aus einem beliebigen ein- oder mehrschichtigen Folienmaterial bestehen. Die Bearbeitungsschicht 2 kann beispielsweise eine Dicke von etwa 5-80 µm, vorzugsweise von 6-50 µm aufweisen. Das Material der Bearbeitungsschicht 2 kann bevorzugter Weise ausgewählt sein aus Polyestern, wie etwa Polyethylenterephthalat (PET), wobei die Polyesterfolie mit einer zusätzlichen Oberflächenbehandlung in Form einer Metallisierung oder einer anderen anorganischen Schicht, zum Beispiel aus SiOx oder AlOx oder auch einer haftvermittelnden Schicht (Primer) zum Auftragen einer Siegelschicht versehen sein kann. Weiters kann die Bearbeitungsschicht 2 auf Polyamiden, zum Beispiel PA 6 oder PA 12, oder anderen Materialien dieser Gruppe bestehen. Als Bearbeitungsschicht 2 können auch Polyolefine, zum Beispiel aus Polyethylen (PE), verwendet werden, wobei hier unterschiedliche PE-Typen (PE-LD, PE-HD, etc.), die zum Beispiel mit Ziegler-Natta-Katalysatoren oder mit Metallocen-Katalysatoren hergestellt sein können, Ethylen-Copolymere (EVA, EMA, etc.) oder Mischungen aus diesen, Polypropylen (PP) und PP-Copolymere oder andere thermoplastische Polyolefine verwendet werden können.

Die Eigenschaften des Lasers werden üblicherweise spezifisch auf das verwendete Material angepasst und im Allgemeinen können dem zu schneidenden Material lasersensitive Füllstoffe oder Pigmente zugesetzt werden, die die Wirkung des Lasers im Material gezielt verstärken.

Als Bearbeitungsschicht 2 können auch Folien aus Biopolymeren auf Basis nachwachsender Rohstoffe, zum Beispiel aus Stärkepolymeren, aus Polymilchsäure (PLA), aus auf Lignin basierten Polymeren, aus Polyhydroxyalkanoaten (PHAs) etc., aus entsprechenden Mischungen oder Compounds, aus biologisch abbaubaren/kompostierbaren Rohstoffen, z.B. speziellen Bio-Polyestern (zum Beispiel Ecoflex), etc., verwendet werden. Die Bearbeitungsschicht 2 kann eine Monofolie sein, die ungereckt (zum Beispiel Cast-PP) oder auch orientiert (zum Beispiel OPA, OPP) sein kann. Die Bearbeitungsschicht 2 kann auch eine coextrudierte Mehrschichtfolie sein, zum Beispiel eine Polyethylenfolie mit einer zusätzlichen Bearbeitungsschicht 2 aus EVOH oder eine Folie mit speziell ausgeführten Siegel- oder Peelschichten. Es können auch andere dem Fachmann bekannte Werkstoffe als Bearbeitungsschicht 2 verwendet werden, wobei die jeweilige Auswahl auf Basis der gewünschten Materialeigenschaften erfolgen kann. Beispielsweise können auch Folien aus Papier oder aus Gewebematerialien als Bearbeitungsschicht 2 verwendet werden oder in dieser enthalten 10 sein.

Die Bearbeitungsschicht 2 kann aus einem einzigen Material aufgebaut sein, oder sie kann aus mehreren Lagen unterschiedlicher Materialien bestehen. Mehrschichtige Bearbeitungsschichten können Beispielsweise extrusionsbeschichtete Folien sein, oder die Bearbeitungsschicht 2 kann eine mit mehreren Materialien coextrudierte Folie sein, um vorteilhafte Eigenschaften unterschiedlicher extrudierbarer Materialien zu kombinieren und/oder um die Oberflächeneigenschaften der Folie durch die jeweils gewählte Außenschicht zu beeinflussen. Zu Beispielen mehrschichtiger und gegebenenfalls coextrudierter Folien zählen Folien aus einem Hauptmaterial, das an einer oder beiden Oberflächen mit einer Beschichtung bzw. mehreren Beschichtungen versehen ist. Zwischen dem Hauptmaterial und der Beschichtung kann eine Primerschicht, Haftschicht oder Kleberschicht vorgesehen sein. Das Hauptmaterial kann beispielsweise aus den oben für die Bearbeitungsschichten beispielhaft angeführten Materialien ausgewählt sein, oder es kann auch aus mehreren Schichten dieser Materialien, jeweils mit oder ohne Zwischenschichten (z.B. Kleber, Primer oder Haftschicht), bestehen. Auch die Beschichtung kann wiederum aus mehreren Schichten bestehen. So kann beispielsweise auf eine Schicht eines Hauptmaterials eine Co-Extrusionsbeschichtung unterschiedlicher Beschichtungsmaterialien aufgebracht sein. Das Hauptmaterial kann entweder einseitig oder beidseitig mit derselben oder mit unterschiedlichen Beschichtungen versehen sein. Als Beschichtungsmaterial kann beispielsweise ein Siegel- oder Peelfilm oder ein Heißsiegellack (HSL), entweder direkt haftend oder mit einer Primer- oder Haftschicht auf das Hauptmaterial aufgebracht werden. Das Beschichtungsmaterial und/oder das Hauptmaterial kann weiters mit einem Lichtschutz, z.B. einer Metallisierung, versehen sein.

Das Material der Barriereschicht 3 kann aus Kunststoffmaterial bestehen, wie etwa Polyester oder anderen Kunststoffen, beispielsweise diejenigen Kunststoffe und Kunststofflaminate, die auch für die Bearbeitungsschicht 2 verwendet werden können, so wie obenstehend definiert. Das Material der Barriereschicht 3 kann auch aus einem Faserwerkstoff bestehen, wie etwa Papier oder Karton, zum Beispiel Papier oder Recyclingpapier mit einer Dicke zwischen 20 µm und 150 µm, bevorzugt zwischen 40 µm und 90 µm. Im Falle von Faserwerkstoffen kann die Barriereschicht 3 auch mit einem Kunststoff extrusionsbeschichtet oder metallisiert sein. Dabei können die Barriereschicht 3 und die Bearbeitungsschicht 2 dasselbe Material bzw. dieselbe Materialkombination oder ein unterschiedliches Material bzw. eine unterschiedliche Materialkombination aufweisen. Eine Barriereschicht 3 aus Kunststoff kann beispielsweise eine Dicke von 5 bis 50 µm, bevorzugt zwischen 12 und 30 µm aufweisen.

Die Verbindungsschicht 4 kann einen Kaschierkleber aufweisen, der beispielsweise ausgewählt sein kann aus Nasskaschier- oder Dispersionsklebern, wie etwa LANDOCOLL 7170 der Firma Svenska Lim; Trockenkaschierklebern, wie etwa ADCOTE™ 545 oder CATALYST F der Firma Rohm and Haas oder Liofol UK 3646 oder UK 6800 der Firma Henkel; aus lösungsmittelfreien Klebersystemen, aus Kaltsiegelklebstoffen, wie etwa Crodaseal 22-121 der Firma Croda Adhesives. Der Kaschierkleber kann auch auf Basis von extrudierbaren Harzen (Hotmelts) oder anderen Polymeren (z.B. Polyolefinen) bestehen. Für die Kaschierung können dann auch Verfahren der Coextrusionskaschierung oder Extrusionskaschierung verwendet werden.

Für die Verbindungsschicht 4 können besonders bevorzugter Weise abziehbare Kleber, nicht aushärtende Kleber und/oder sogenannte PSA-Klebersysteme (PSA: "Pressure Sensitive Adhesive" - Druckempfindlicher Kleber) bzw. Reclose-Kleber verwendet werden.

Ein nicht aushärtender Klebstoff ist ein Klebstoff ohne Verfestigungsmechnismus und ist folglich permanent klebrig (oder dauerklebrig), d.h. dass ein nicht aushärtender Klebstoff seine Klebrigkeit nicht verliert. Die wesentliche unterscheidende Eigenschaft, ist die Kettenlänge der Molekülketten des Klebstoffes bzw. die daraus resultierende mittlere Molmasse des Materials. In einem nicht aushärtenden Klebstoff sind die Molekülketten auch nach dem Trocknen ausreichend kurz, damit der Klebstoff dauerklebrig bleibt. Dahingegen erfoglt bei aushärtenden Klebstoffen in Folge der Härtungsreaktion eine Verlängerung bzw. Vernetzung der Molekülketten, die dem Klebstoff nach dem Aushärten sein Klebrigkeit nehmen. Allerdings ist anzumerken, dass die Unterscheidung in aushärtender und nicht aushärtender Klebstoff nichts hinsichtlich der Hafteigenschaften (Adhäsion, Kohäsion) des Klebstoffes aussagt. Es gibt in beiden Gruppen mehr oder weniger stark und schwach haftende Klebstoffe.

Die im Lebensmittelbereich einsetzbaren Klebstoffe haben unterschiedlichste Eigenschaften und werden daher für die verschiedensten Anwendungsfälle verwendet. Sogenannte druckempfindliche Klebstoffe (pressure sensitive adhesive, PSA), oftmals auch als Haftklebstoffe bezeichnet, entfalten die klebende Wirkung durch einfachen Druck. Ein Haftklebstoff ist ein typischer Vertreter eines nicht aushärtenden Klebstoffs. Solche Klebstoffe sind insbesondere von Anwendungen wie Klebebändern bekannt. Oftmals werden in solchen Anwendungen auch Mischungen als Klebemassen verwendet. Diese Haftklebstoffe unterscheiden sich auch hinsichtlich ihrer Hafteigenschaften (Klebrigkeit), die als Schälfestigkeit (als Widerstand gegen Abschälung vom Substrat auf dem der Klebstoff aufgetragen ist) angegeben werden kann.

Abziehbare Klebstoffe (mit niedriger Schälfestigkeit), meistens ebenfalls in Form von PSA, können nach der Applikation wieder entfernt und in der Regel mehrmals verschlossen werden. Solche abziehbaren Klebstoffe werden beispielsweise verwendet, wenn nach dem Öffnen ein Wiederverschließen der Verpackung erwünscht ist.

In einem erfindungsgemäßen Ausführungsbeispiel gemäß Fig.2 sind die Bearbeitungsschicht 2 und die Barriereschicht 3 durch eine Verbindungsschicht 4 miteinander verbunden, wobei Verbindungsschicht 4 als weitere Schicht 6 dient. Die Verbindungsschicht 4 enthält demnach das den Laserstrahl 5 reflektierende und/oder streuende Material, welches die Wirkenergie eines von Seiten der Bearbeitungsschicht 2 her eingebrachten Laserstrahls 5 auf die Barriereschicht 3 verringert. Dieses den Laserstrahl 5 reflektierende und/oder streuende Material kann beispielsweise Effektpigment 10, wie beispielsweise Metall-Effektpigment, sein, das dem Material der Verbindungsschicht 4 vor dem Auftragen (bzw. bei Extrusionskaschierung vor dem Extrudieren) in Pasten- oder Pulverform zugemischt wurde.

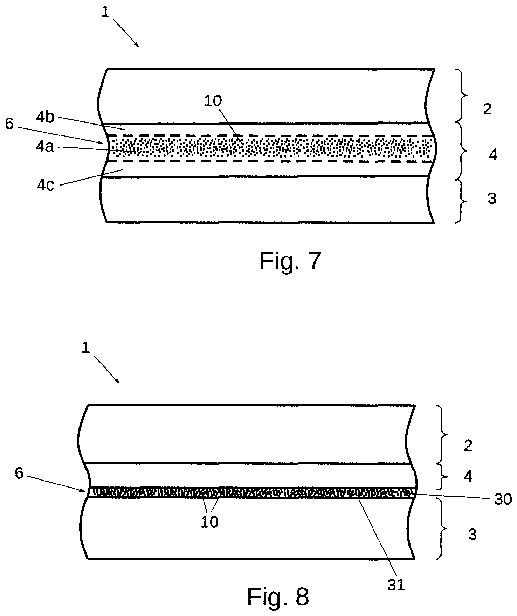

Die Verbindungsschicht 4 kann auch mehrlagig ausgeführt sein, wie anhand der Fig.7 beschrieben wird. Die Verbindungsschicht 4 ist im gezeigten Ausführungsbeispiel dreilagig ausgeführt mit einer zentralen Lage 4a, die im gezeigten Ausführungsbeispiel als reflektierendes und/oder streuendes Material Effektpigment 10 enthält, und mit zwei benachbarten Lagen 4b, 4c, die kein reflektierendes und/oder streuendes Material, wie beispielsweise Effektpigment 10, enthalten. Im Falle einer mehrlagigen Ausführung der Verbindungsschicht 4 enthält zumindest eine der Lagen reflektierendes und/oder streuendes Material, wie beispielsweise die Effektpigmente 10. Die beiden äußeren Lagen 4b, 4c der Verbindungsschicht 4 sind beispielsweise Haftvermittler, die die Haftung zwischen der Verbindungsschicht 4 und der anliegenden Barriereschicht 3 und Bearbeitungsschicht 2 verbessern. Die mehrlagige Verbindungsschicht 4 besteht aus zumindest einer Lage 4b oder 4c ohne und zumindest einer Lage 4a mit reflektierendem und/oder streuendem Material, wie beispielsweise Effektpigment 10. Dabei umschließen die Lagen 4b, 4c ohne reflektierenden und/oder streuenden Material, vorzugsweise die Lage mit reflektierenden und/oder streuenden Material. Die Herstellung der mehrlagigen Verbindungsschicht 4 erfolgt vorzugsweise im Coextrusionsverfahren.

Wenn die Verbindungsschicht 4 in einem Extrusionsverfahren auf die Barriereschicht 3 oder die Bearbeitungsschicht 2 aufgebracht wird, können im Falle von Effektpigmenten 10 aufgrund deren Abrasivität die Düsen der Extrusionsanlage beim Extrudieren beschädigt werden, beispielsweise zerkratzt werden. Durch das Vorsehen zumindest einer Lage 4b, 4c ohne Effektpigmenten 10, kann diese ungewünschte Wirkung der Effektpigmente 10 auf die Extrusionsanlage eliminiert werden.

In einer weiteren erfindungsgemäßen Ausgestaltung kann an der der Barriereschicht 3 zugewandten Oberfläche der Bearbeitungsschicht 2 oder an der der Bearbeitungsschicht 2 zugewandten Oberfläche 31 der Barriereschicht 3 eine Lackschicht 30 als weitere Schicht 6 vorgesehen sein, wie in Fig.8 dargestellt. Auch in diesem Fall kann als reflektierendes und/oder streuendes Material in der weiteren Schicht 6 Effektpigment 10, vorzugsweise Metall-Effektpigment, verwendet werden. Zwischen der Oberfläche 31 der Barriereschicht 3 und der Lackschicht 30 bzw. der Oberfläche der Bearbeitungsschicht 2 und der Lackschicht kann zusätzlich auch ein Haftvermittler vorgesehen sein. Ebenso kann zwischen der Lackschicht und der Verbindungsschicht 4 ein Haftvermittler vorgesehen sein. Die Effektpigmente 10 werden dem Lack vor dem Auftragen auf der Barriereschicht 3 bzw. der Bearbeitungsschicht 2 zugemischt. Hierbei sind Lackdicken von 3 - 10 g/m², vorzugsweise 5 - 6 g/m², vorteilhaft, wobei 5 - 40 Gewichts%, vorzugsweise 15 - 25 Gewichts%, Effektpigment 10 enthalten sind. Als Lack kann vorteilhaft ein herkömmlicher Heißsiegellack verwendet werden. Der Lack kann vor dem Auftragen mit dem reflektierenden und/oder streuenden Material gemischt werden, wodurch eine homogene Verteilung des Materials in der Lackschicht erzielt werden kann. Bei dieser Ausgestaltung des erfindungsgemäßen Folienverpackungsmaterials ist in der Verbindungsschicht 4 vorzugsweise kein reflektierendes und/oder streuendes Material, wie Effektpigment 10, enthalten.

Zwischen der Barriereschicht 3 und der Bearbeitungsschicht 2 können auch mehrere Schichten des Folienverpackungsmaterials 1 angeordnet sein, wie z.B. eine Verbindungsschicht 4, eine Lackschicht 30, Haftvermittlerschichten, usw., wobei zumindest eine davon als weitere Schicht 6 mit reflektierendem und/oder streuendem Material, wie Effektpigment 10, vorzugsweise Metall-Effektpigment, dient.

Eine der erfindungsgemäßen Wirkungen, die mit dem Folienverpackungsmaterial 1 gemäß Fig. 2, Fig.7 oder Fig.8 erreicht werden kann, ist in Fig. 3 beispielhaft dargestellt. Fig. 3 entspricht im Wesentlichen der Darstellung der Fig. 1, wobei jedoch anstelle der Laminatfolie 12 das erfindungsgemäße Folienverpackungsmaterial 1 auf der Transportwalze 14 angeordnet ist. Wie dies bei den drei dargestellten Laserstrahlen 5, 5' und 5" zu erkennen ist, verhindert die Verbindungsschicht 4 mit dem reflektierenden und/oder streuenden Material, dass der Laserstrahl 5, 5', 5" zu stark in die Barriereschicht 3 eindringt bzw. diese durchtrennt. Versuche haben gezeigt, dass (verglichen mit herkömmlichen Laminatfolien) diese Eigenschaft für einen relativ breiten Bereich der Laserenergie stabil aufrechterhalten wird, was die Parametrisierung erheblich erleichtert.

Bei den beiden dargestellten Verwerfungen befindet sich der Fokussierpunkt 13', 13" der Laserstrahlen 5', 5" zwar wiederum deutlich unterhalb der Verbindungsschicht 4 liegt daher in der Barriereschicht 2 bzw. darunter, der Laserstrahl wird in diesen Fällen jedoch von dem reflektierenden und/oder streuenden Material in der weiteren Schicht 6 gestreut und reflektiert, bevor er den Fokussierpunkt 13', 13" erreicht, und kann somit unterhalb der weiteren Schicht 6 keine Energie einbringen, die ausreicht, um das Material der Barriereschicht 3 zu beschädigen. Dennoch werden die Laser-Teilschnitte 11, 11', 11" auch im Bereich der Verwerfungen zuverlässig in die Bearbeitungsschicht 2 eingebracht.

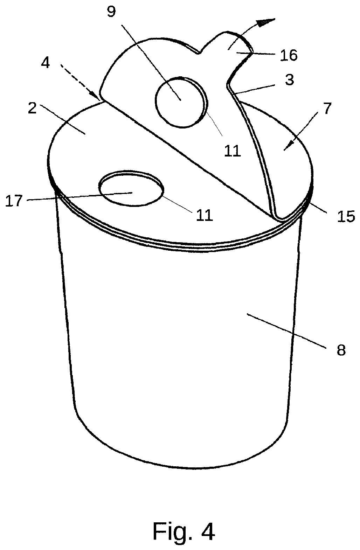

Das erfindungsgemäße Folienverpackungsmaterial kann für zahlreiche vorteilhafte Verpackungslösungen verwendet werden. Eine bevorzugte Anwendung ist in Fig. 4 beispielhaft dargestellt.

Fig. 4 zeigt einen Verpackungsbehälter 8, beispielsweise in Form eines Joghurtbechers, dessen Öffnung mit einer Platine 7 verschlossen ist. Die Platine 7 besteht aus einem erfindungsgemäßen Folienverpackungsmaterial 1, wobei die Bearbeitungsschicht 2 aus einem Siegelmaterial besteht (bzw. ein Siegelmaterial auf der der Verbindungsschicht 4 abgewandten Unterseite aufweist), mit dem die Platine 7 in herkömmlicher Weise mit dem Rand 15 des Verpackungsbehälters 8 versiegelt ist.

An der dem Inneren des Verpackungsbehälters 8 zugewandten Seite der Platine ist mittels eines Laser-Teilschnitts 11 ein Öffnungsabschnitt 9 ausgeschnitten. Um den Behälter zu öffnen kann die Barriereschicht 3 der Platine 7 mithilfe einer Lasche 16 in bekannter Weise vom Verpackungsbehälter 8 abgezogen werden, wobei sich jedoch nicht die gesamte Platine 7 vom Rand 15 des Verpackungsbehälters 8 löst, sondern lediglich die Barriereschicht 3 von der Bearbeitungsschicht 2 abgezogen wird. Zu diesem Zweck weist die Verbindungsschicht 4 einen druckempfindlichen Kaschierkleber auf, der vorzugsweise beim Abziehen der Barriereschicht 3 auf dieser Barriereschicht 3 haftet, sodass lediglich die nicht klebrige und saubere Bearbeitungsschicht 2 auf dem Verpackungsbehälter bleibt, wenn die Barriereschicht 3 abgezogen wurde. Der durch den Laser-Teilschnitt 11 ausgeschnittene Öffnungsabschnitt 9, der nicht mit der restlichen Bearbeitungsschicht 2 verbunden ist, haftet jedoch weiterhin auf der Barriereschicht 2 und gibt dadurch eine Öffnung 17 in der Bearbeitungsschicht 2 frei. Die Öffnung 17 kann beispielsweise als Ausguss-, Trink- oder Entnahmeöffnung oder in Form eines Loch- oder Gittersiebes definiert und zu dem entsprechenden Zweck vorteilhaft geformt sein.

Zum Wiederverschließen der Platine 7 kann die vollständig oder teilweise abgezogene Barriereschicht 3 wieder auf die Bearbeitungsschicht 2 zurückgeklappt oder -gelegt und angedrückt werden, wobei der druckempfindliche Kleber der Verbindungsschicht 4 die Verbindung zwischen Bearbeitungsschicht 2 und Barriereschicht 3 wiederherstellt.

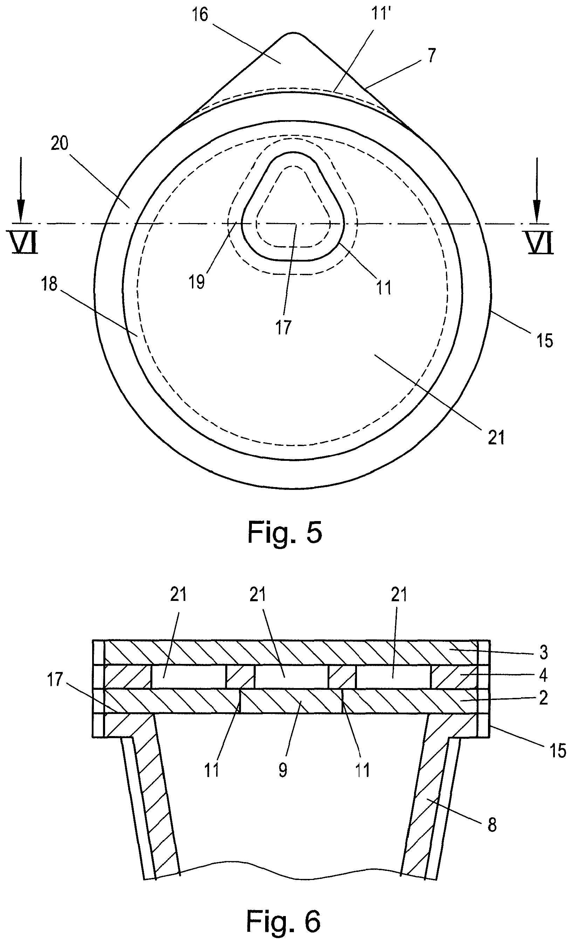

Fig. 5 zeigt eine weitere Ausführungsform einer erfindungsgemäßen Platine 7 von der Seite der Bearbeitungsschicht 2 her gesehen, wobei die Kaschierung des Kaschierklebers als Verbindungsschicht 4 nicht vollflächig, sondern nur in bestimmten Kaschierbereichen 18 ausgeführt ist. Die Platine 7 hat eine herkömmliche Runde Form und weist zum Öffnen eine Lasche 16 auf. Die Platine 7 wird an einem ringförmigen Versiegelungsbereich 20 auf Seiten der Bearbeitungsschicht 15 auf einen Behälter 8 aufgesiegelt, wie dies in Fig. 6 (Schnitt entlang der Linie VI - VI in Fig.5) schematisch dargestellt ist, wobei die Schichtdicken in Fig. 6 stark überzeichnet dargestellt sind.

Die Barriereschicht 3 ist jedoch nicht vollflächig mit der Bearbeitungsschicht 2 verbunden, sondern mithilfe einer partiellen Beschichtung nur in Teilbereichen, wobei am Rand der Platine 7 ein äußerer Kaschierbereich 18 vorgesehen ist, der sich bis zum Rand 15 der Platine 7 erstreckt und auch die Lasche 16 umfasst, und der sich nach innen hin ein wenig über den Versiegelungsbereich 20 zur Mitte der Platine 7 hin erstreckt. Der äußere Kaschierbereich 18 dient dem Zusammenhalt der Platine 7 und schließt den unversiegelten Bereich 21 im Inneren der Platine hermetisch ein.

Im Bereich der Öffnung 17, die durch einen Laser-Teilschnitt 11 definiert ist, ist ein innerer Kaschierbereich 19 vorgesehen. Dieser innere Kaschierbereich 19 dient insbesondere dem sicheren Einbringen des Laser-Teilschnitts 11, er hat jedoch weiters die Wirkung, dass beim Wiederverschließen der Öffnung der Rand der Öffnung 17 abgedichtet wird.

Die Platine 7 wird in ähnlicher Weise wie bei Fig. 4 durch Abziehen der Barriereschicht 3 geöffnet, wobei der Teil der Bearbeitungsschicht 2 innerhalb des Laser-Teilschnitts 11 auf der Barriereschicht 3 haften bleibt, und die Öffnung 17 freigibt.

Der Bereich der Lasche 16 kann ebenfalls durch einen Laser-Teilschnitt 11' entlang des Rands 15 des Behälters 8 vom restlichen Teil der Platine 7 abgegrenzt sein, damit die Lasche 16 zum Öffnen als Ganzes ergriffen und abgezogen werden kann.

Mithilfe der partiellen Kaschierung sind vielfache weitere Möglichkeiten gegeben, um Verschlusselemente mit praktischen, benutzerfreundlichen und vorteilhaften Merkmalen Auszustatten.

## Patentansprüche

1. Folienverpackungsmaterial (1) mit zumindest einer Bearbeitungsschicht (2) und zumindest einer Barriereschicht (3), wobei zwischen der Bearbeitungsschicht (2) und der Barriereschicht (3) zumindest eine weitere Schicht (6) angeordnet ist, **dadurch gekennzeichnet, dass** in der weiteren Schicht (6) ein einen Laserstrahl (5) reflektierendes und/oder streuendes Material vorgesehen ist, welches die Wirkenergie eines von Seiten der Bearbeitungsschicht (2) her eingebrachten Laserstrahls (5) auf die Barriereschicht (3) verringert, wobei in die Bearbeitungsschicht (2) Laser-Teilschnitte (11) eingebracht sind.

2. Folienverpackungsmaterial (1) nach Anspruch 1, **dadurch gekennzeichnet, dass** die Bearbeitungsschicht (2) und die Barriereschicht (3) mittels zumindest einer Verbindungsschicht (4) miteinander zu dem Folienverpackungsmaterial (1) flächig verbunden sind und das reflektierende und/oder streuende Material in der Verbindungsschicht (4) als weitere Schicht (6) vorgesehen ist.

3. Folienverpackungsmaterial (1) nach Anspruch 2, **dadurch gekennzeichnet, dass** die Verbindungsschicht (4) mehrlagig ausgeführt ist, wobei zumindest eine erste Lage (4a) mit reflektierendem und/oder streuendem Material und zumindest eine weitere Lage (4b, 4c) ohne reflektierendem und/oder streuendem Material vorgesehen ist.

4. Folienverpackungsmaterial (1) nach Anspruch 3, **dadurch gekennzeichnet, dass** die erste Lage (4a) der Verbindungsschicht (4) von Lagen (4b, 4c) ohne reflektierendem und/oder streuendem Material umgeben ist.

5. Folienverpackungsmaterial (1) nach Anspruch 1, **dadurch gekennzeichnet, dass** an der der Barriereschicht (3) zugewandten Oberfläche der Bearbeitungsschicht (2) oder der der Bearbeitungsschicht (2) zugewandten Oberfläche (31) der Barriereschicht (3) eine Lackschicht (30) als weitere Schicht (6) vorgesehen ist.

6. Folienverpackungsmaterial (1) nach einem der Ansprüche 1 bis 5, **dadurch gekennzeichnet, dass** in der weiteren Schicht Effektpigment (10), vorzugsweise Metall-Effektpigment (10), als reflektierendes und/oder streuendes Material enthalten ist, wobei das Effektpigment (10) vorzugsweise eine durchschnittliche Körnung im Bereich zwischen 10 µm und 100 µm, bevorzugt zwischen 15 µm und 70 µm und insbesondere im Bereich zwischen 20 und 60 µm aufweist.

7. Folienverpackungsmaterial (1) nach einem der Ansprüche 1 bis 6, **dadurch gekennzeichnet, dass** die Verbindungsschicht (4) einen Kaschierkleber aufweist.

8. Folienverpackungsmaterial (1) nach Anspruch 7, **dadurch gekennzeichnet, dass** der Kaschierkleber ein druckempfindlicher Kleber ist.

9. Folienverpackungsmaterial (1) nach Anspruch 8, **dadurch gekennzeichnet, dass** der druckempfindliche Kaschierkleber beim Abziehen der Barriereschicht (3) von der Bearbeitungsschicht (2) im Wesentlichen vollständig auf der Barriereschicht (3) haftet.

10. Folienverpackungsmaterial (1) nach einem der Ansprüche 7 bis 9, **dadurch gekennzeichnet, dass** dem Kaschierkleber reflektierendes und/oder streuendes Material, vorzugsweise Effektpigment (10), zugemischt ist.

11. Folienverpackungsmaterial (1) nach einem der Ansprüche 1 bis 10, **dadurch gekennzeichnet, dass** in der weiteren Schicht zusätzlich Farbpigmente, vorzugsweise mit einem Gewichtsanteil zwischen 1% - 10%, vorzugsweise zwischen 2 - 3 %, enthalten sind.

12. Aus einem Folienverpackungsmaterial (1) gemäß einem der Ansprüche 1 bis 11 hergestelltes Verpackungselement, insbesondere eine Platine (7) zum Verschließen von Verpackungsbehältern (8).

13. Verpackungselement nach Anspruch 12, **dadurch gekennzeichnet, dass** die Bearbeitungsschicht (2) ein Siegelmaterial aufweist.

14. Verpackungselement nach Anspruch 12 oder 13, **dadurch gekennzeichnet, dass** die Verbindungsschicht (4) einen nicht aushärtenden Kaschierkleber und/oder einen druckempfindlichen Kaschierkleber aufweist und in die Bearbeitungsschicht (2) zumindest ein mittels zumindest eines Laser-Teilschnitts definierter Öffnungsabschnitt (9) eingebracht ist.

15. Verfahren zur Herstellung eines Folienverpackungsmaterials (1), wobei eine Bearbeitungsschicht (2) und eine Barriereschicht (3) miteinander zu dem Folienverpackungsmaterial (1) verbunden werden, **dadurch gekennzeichnet dass** in einer zwischen der Bearbeitungsschicht (2) und die Barriereschicht (3) angeordneten weiteren Schicht (6) ein einen Laserstrahl (5) reflektierendes und/oder streuendes Material eingebracht wird, welches die Wirkenergie eines von Seiten der Bearbeitungsschicht (2) her eingebrachten Laserstrahls (5) auf die Barriereschicht (3) verringert, und dass in die Bearbeitungsschicht (2) mittels zumindest eines Laserstrahls (5) zumindest ein Laser-Teilschnitt eingebracht wird.

16. Verfahren nach Anspruch 15, **dadurch gekennzeichnet, dass** das Folienverpackungsmaterial (1) in Form von Verpackungselementen, insbesondere Platinen (7), ausgestanzt wird.

## Claims

1. Film packaging material (1) having at least one processing layer (2) and at least one barrier layer (3), at least one further layer (6) being arranged between the processing layer (2) and the barrier layer (3), **characterized in that** a material which reflects and/or scatters a laser beam (5) is provided in the further layer (6), which material reduces the active energy of a laser beam (5) introduced from the side of the processing layer (2) onto the barrier layer (3), partial laser cuts (11) being introduced into the processing layer (2).

2. Film packaging material (1) according to claim 1, **characterized in that** the processing layer (2) and the barrier layer (3) are connected to one another in a planar manner by means of at least one connecting layer (4) to form the film packaging material (1) and the reflective and/or scattering material is provided as a further layer (6) in the connecting layer (4).

3. Film packaging material (1) according to claim 2, **characterized in that** the connecting layer (4) is designed to be multi-layered, at least one first layer (4a) which has reflecting and/or scattering material being provided and at least one further layer (4b, 4c) without reflecting and/or scattering material being provided.

4. Film packaging material (1) according to claim 3, **characterized in that** the first layer (4a) of the connecting layer (4) is surrounded by layers (4b, 4c) without reflecting and/or scattering material.

5. Film packaging material (1) according to claim 1, **characterized in that** a lacquer layer (30) is provided as a further layer (6) on the surface of the processing layer (2) facing the barrier layer (3) or on the surface (31) of the barrier layer (3) facing the processing layer (2).

6. Film packaging material (1) according to any of claims 1 to 5, **characterized in that** the further layer contains effect pigment (10), preferably metal effect pigment (10), as reflecting and/or scattering material, the effect pigment (10) preferably having an average grain size in the range of between 10 µm and 100 µm, preferably between 15 µm and 70 µm and in particular in the range of between 20 and 60 µm.

7. Film packaging material (1) according to any of claims 1 to 6, **characterized in that** the connecting layer (4) has a laminating adhesive.

8. Film packaging material (1) according to claim 7, **characterized in that** the laminating adhesive is a pressure-sensitive adhesive.

9. Film packaging material (1) according to claim 8, **characterized in that** the pressure-sensitive laminating adhesive adheres substantially completely to the barrier layer (3) when the barrier layer (3) is removed from the processing layer (2).

10. Film packaging material (1) according to any of claims 7 to 9, **characterized in that** the laminating adhesive is admixed with reflecting and/or scattering material, preferably effect pigment (10).

11. Film packaging material (1) according to any of claims 1 to 10, **characterized in that** the further layer additionally contains color pigments, preferably having a weight fraction of between 1%-10%, preferably between 2-3%.

12. Packaging element, in particular a lid (7) for closing packaging containers (8), produced from a film packaging material (1) according to any of claims 1 to 11.

13. Packaging element according to claim 12, **characterized in that** the processing layer (2) has a sealing material.

14. Packaging element according to either claim 12 or claim 13, **characterized in that** the connecting layer (4) has a non-curing laminating adhesive and/or a pressure-sensitive laminating adhesive and at least one opening portion (9) defined by means of at least one partial laser cut is introduced into the processing layer (2).

15. Method for producing a film packaging material (1), a processing layer (2) and a barrier layer (3) being connected to one another to form the film packaging material (1), **characterized in that** a material which reflects and/or scatters a laser beam (5) is introduced into a further layer (6) arranged between the processing layer (2) and the barrier layer (3), which material reduces the active energy of a laser beam (5) introduced from the side of the processing layer (2) onto the barrier layer (3), and **in that** at least one partial laser cut is introduced into the processing layer (2) by means of at least one laser beam (5).

16. Method according to claim 15, **characterized in that** the film packaging material (1) is punched out in the form of packaging elements, in particular lids (7).

## Revendications

1. Matériau d'emballage flexible (1) comportant au moins une couche d'usinage (2) et au moins une couche barrière (3), au moins une couche supplémentaire (6) étant disposée entre la couche d'usinage (2) et la couche barrière (3), **caractérisé en ce qu'**un matériau réfléchissant et/ou diffusant un faisceau laser (5) est prévu dans la couche supplémentaire (6), lequel matériau réfléchissant et/ou diffusant réduit l'énergie active d'un faisceau laser (5) appliqué à partir de côtés de la couche d'usinage (2) sur la couche barrière (3), des découpes laser partielles (11) étant réalisées dans la couche d'usinage (2).

2. Matériau d'emballage flexible (1) selon la revendication 1, **caractérisé en ce que** la couche d'usinage (2) et la couche barrière (3) sont reliées à plat entre elles au moyen d'au moins une couche de liaison (4) pour former le matériau d'emballage flexible (1), et **en ce que** le matériau réfléchissant et/ou diffusant est prévu dans la couche de liaison (4) en tant que couche supplémentaire (6).

3. Matériau d'emballage flexible (1) selon la revendication 2, **caractérisé en ce que** la couche de liaison (4) présente plusieurs épaisseurs, au moins une première épaisseur (4a) étant pourvue d'un matériau réfléchissant et/ou diffusant, et au moins une épaisseur supplémentaire (4b, 4c) n'étant pourvue d'aucun matériau réfléchissant et/ou diffusant.

4. Matériau d'emballage flexible (1) selon la revendication 3, **caractérisé en ce que** la première épaisseur (4a) de la couche de liaison (4) est entourée d'épaisseurs (4b, 4c) exemptes de matériau réfléchissant et/ou diffusant.

5. Matériau d'emballage flexible (1) selon la revendication 1, **caractérisé en ce qu'**une couche de laque (30) est prévue en tant que couche supplémentaire (6) sur la surface de la couche d'usinage (2) tournée vers la couche barrière (3) ou sur la surface (31) de la couche barrière (3) tournée vers la couche d'usinage (2).

6. Matériau d'emballage flexible (1) selon l'une des revendications 1 à 5, **caractérisé en ce que** la couche supplémentaire contient un pigment à effet (10), de préférence un pigment à effet métallique (10), en tant que matériau réfléchissant et/ou diffusant, le pigment à effet (10) présentant de préférence une granulométrie moyenne comprise entre 10 et 100 µm, plus préférentiellement entre 15 et 70 µm et en particulier entre 20 et 60 µm.

7. Matériau d'emballage flexible (1) selon l'une des revendications 1 à 6, **caractérisé en ce que** la couche de liaison (4) présente un adhésif de stratification.

8. Matériau d'emballage flexible (1) selon la revendication 7, **caractérisé en ce que** l'adhésif de stratification est un adhésif sensible à la pression.

9. Matériau d'emballage flexible (1) selon la revendication 8, **caractérisé en ce que** l'adhésif de stratification sensible à la pression adhère sensiblement complètement à la couche barrière (3) lorsque la couche barrière (3) est retirée de la couche d'usinage (2).

10. Matériau d'emballage flexible (1) selon l'une des revendications 7 à 9, **caractérisé en ce qu'un** matériau réfléchissant et/ou diffusant, de préférence un pigment à effet (10), est mélangé à l'adhésif de stratification.

11. Matériau d'emballage flexible (1) selon l'une des revendications 1 à 10, **caractérisé en ce que** la couche supplémentaire contient en outre des pigments colorés, de préférence selon un pourcentage en poids compris entre 1 et 10 %, de préférence entre 2 et 3 %.

12. Élément d'emballage fabriqué à partir d'un matériau d'emballage flexible (1) selon l'une des revendications 1 à 11, en particulier opercule (7) destiné à refermer des récipients d'emballage (8).

13. Élément d'emballage selon la revendication 12, **caractérisé en ce que** la couche d'usinage (2) présente un matériau d'étanchéité.

14. Élément d'emballage selon la revendication 12 ou 13, **caractérisé en ce que** la couche de liaison (4) présente un adhésif de stratification non durcissant et/ou un adhésif de stratification sensible à la pression, et **en ce qu'**au moins une section d'ouverture (9) définie au moyen d'au moins une découpe laser partielle est réalisée dans la couche d'usinage (2).

15. Procédé de production d'un matériau d'emballage flexible (1), dans lequel une couche d'usinage (2) et une couche barrière (3) sont reliées entre elles pour former le matériau d'emballage flexible (1), **caractérisé en ce qu'**un matériau réfléchissant et/ou diffusant un faisceau laser (5) est appliqué dans une couche supplémentaire (6) disposée entre la couche d'usinage (2) et la couche barrière (3), lequel matériau réfléchissant et/ou diffusant réduit l'énergie active d'un faisceau laser (5) appliqué à partir de côtés de la couche d'usinage (2) sur la couche barrière (3), et **en ce qu'**au moins une découpe laser partielle est réalisée dans la couche d'usinage (2) au moyen d'au moins un faisceau laser (5).

16. Procédé selon la revendication 15, **caractérisé en ce que** le matériau d'emballage flexible (1) est découpé sous forme d'éléments d'emballage, en particulier d'opercules (7).
